# EUROPÄISCHE PATENTSCHRIFT

(11) **EP 1 663 733 B1**
(45) Veröffentlichungstag und Bekanntmachung des Hinweises auf die Patenterteilung: **06.05.2009**
(21) Anmeldenummer: 04765657.4
(22) Anmeldetag: 23.09.2004
(51) Int. Cl.: B60R 21/20, B29C 44/12, B32B 27/12

(54) **INNENVERKLEIDUNGSTEIL ZUR ABDECKUNG EINES AIRBAGS**
INTERIOR TRIM PART FOR COVERING AN AIRBAG
PIECE D'HABILLAGE INTERIEURE POUR LE RECOUVREMENT D'UN AIRBAG

(30) Priorität: 24.09.2003 DE 10345026
(43) Veröffentlichungstag der Anmeldung: 07.06.2006
(73) Patentinhaber: Faurecia Innenraum Systeme GmbH, 76767 Hagenbach (DE)
(72) Erfinder: SCHWEIZER, Gordon, 76764 Rheinzabern (DE); MELDE, Lars, 38122 Braunschweig (DE); BÜHLER, Wolfram, 67346 Speyer (DE); ZIMMERLE, Jürgen, 88167 Röthenbach (DE); BAMBERG, Klaus, 76767 Hagenbach (DE)
(74) Vertreter: Pfenning, Meinig & Partner GbR
(86) Internationale Anmeldenummer: PCT/EP2004/010846
(87) Internationale Veröffentlichungsnummer: WO 2005/030537

(56) Entgegenhaltungen:
- DE-A- 10 135 224
- US-A- 5 322 324
- US-A- 6 070 901

## Beschreibung

Die Erfindung betrifft ein Innenverkleidungsteil zur Abdeckung eines Airbags, also eines Gassacks eines Rückhaltesystems für Fahrzeuginsassen, nach dem Oberbegriff des Hauptanspruchs. Die Erfindung betrifft ferner eine entsprechende Airbaganordnung und ein Verfahren zur Herstellung eines solchen Innenverkleidungsteils.

Ein dreischichtiger Aufbau derartiger Innenverkleidungsteile mit einem flächigen Träger, einer geschäumten Zwischenlage und einem Oberflächendekor, das z.B. aus Leder, einem Gewebe oder einer Kunststoffhaut bestehen kann, ist üblich und ermöglicht eine einfache Herstellung des Innenverkleidungsteils, das dabei mit angenehmen sowohl optischen als auch haptischen Eigenschaften ausgestattet werden kann. Nach dem Stand der Technik ist es auch bekannt, den Träger mit einer Aussparung als Durchtrittsöffnung für den Airbag zu versehen, so dass das Innenverkleidungsteil dort eine Schicht weniger aufweist. Das Innenverkleidungsteil bekommt dadurch in einem für einen Airbagdurchtritt vorgesehenen Bereich eine weichere Struktur, die von dem sich öffnenden Airbag durchstoßen werden kann, ohne dass dafür eine aufwendige Klappenkonstruktion mit hohen Belastungen ausgesetzten Scharnierachsen und -lagern erforderlich wäre. Auch erreicht man dadurch bereits eine deutliche Reduzierung eines für Fahrzeuginsassen gefährlichen Partikelflugs aufgrund einer von dem sich öffnenden Airbag verursachten Zerstörung harter Bauteile. Um dem Innenverkleidungsteil in dem entsprechenden Bereich trotz der Aussparung im Träger eine hinreichend hohe Formstabilität zu geben, ist es ferner bekannt, dort eine diese Aussparung abdeckende Einlage in die Zwischenlage einzulegen. Diese Einlage, für die in der Druckschrift WO 03/033313 A1 beispielsweise ein Kissen aus Schnittschaum vorgeschlagen worden ist, kann dabei aus einem in weiten Grenzen beliebigen, verglichen mit dem Träger weicheren Material bestehen, das geeignet ist, einen die Zwischenlage bildenden Bereich zumindest teilweise auszufüllen und im Bereich der Durchtrittsöffnung eine vorgegebene Oberflächenform des Innenverkleidungsteils zu gewährleisten.

DE 10135224 A1 beschreibt ein Innenverkleidungsteil gemäß den Oberbegriff des Anspruchs 1.

Die nach dem Stand der Technik bekannten Ausführungsformen gattungsgemäßer Innenverkleidungsteile sind jedoch mit Nachteilen verbunden, die insbesondere daher rühren, dass je nach Szenario eines Unfalls bzw. einer Airbagauslösung das Innenverkleidungsteil mit einer von Fall zu Fall sehr unterschiedlichen Wucht vom Airbag getroffen werden kann. Das ist naheliegenderweise der Fall bei zwei- oder mehrstufigen Airbagsystemen, bei denen bei leichten Unfällen eine Auslösung nur einer Stufe oder nicht aller Stufen vorgesehen ist oder eine Zeitverzögerung bis zu einer Auslösung einer weiteren Stufe vom Szenario abhängig ist. Verursacht sein können sehr große Unterschiede zwischen verschiedenen möglichen Öffnungsstößen aber auch durch eine unter Umständen beträchtliche Temperaturabhängigkeit von Eigenschaften einer beispielsweise pyrotechnischen Füllungsvorrichtung. Nun ist das Innenverkleidungsteil im Bereich der Durchtrittsöffnung auf jeden Fall hinreichend schwach auszuführen, um ein sicheres Aufbrechen durch den sich öffnenden Airbag auch bei einem Öffnungsstoß mit geringstmöglicher Wucht zu gewährleisten. Bei Ausführungen nach dem Stand der Technik hat das zur Folge, dass bei einer Airbagauslösung nur ein sehr begrenzter und vom Szenario weitgehend unabhängiger Energiebetrag durch das Aufbrechen des Innenverkleidungsteils absorbiert werden kann. Bei Szenarien mit einem sich mit größerer Wucht öffnenden Airbag wird dadurch ein wesentlich geringerer Energiebetrag durch Aufreißen und Aufklappen der Abdeckung absorbiert, als mit Blick auf die Wucht des Öffnungsstoßes wünschenswert wäre. Das wiederum hat dann zur Folge, dass eine durch überschüssige Energie verursachte Materialzerstörung am Innenverkleidungsteil und an angrenzenden Bauteilen und ein damit verbundener, Fahrzeuginsassen gefährdender Partikelflug kaum oder nur mit hohem Aufwand wie beispielsweise durch eine aufwendige Verstärkung des Innenverkleidungsteils in Bereichen, die die Durchtrittsöffnung umgeben, zu vermeiden ist.

Der Erfindung liegt also die Aufgabe zugrunde, ein gattungsgemäßes Innenverkleidungsteil und eine entsprechende Airbaganordnung zu entwickeln, die einen einfachen und preiswert herzustellende Aufbau verbindet mit Eigenschaften, die bei einer Airbagauslösung ein unkontrolliertes Aufplatzen sowie eine mit Splitterbildung, Partikelflug und einer Entstehung scharfer Kanten verbundene Materialzerstörung sicher verhindern, und zwar für einen möglichst weiten Bereich möglicher Energieeinträge durch den sich öffnenden Airbag in das Innenverkleidungsteil. Der Erfindung liegt ferner die Aufgabe zugrunde, ein möglichst aufwandsarmes Herstellungsverfahren für ein solches Innenverkleidungsteil vorzuschlagen.

Diese Aufgabe wird erfindungsgemäß gelöst durch ein Innenverkleidungsteil mit den kennzeichnenden Merkmalen des Hauptanspruchs in Verbindung mit den Merkmalen des Oberbegriffs des Hauptanspruchs sowie durch eine Airbaganordnung mit den Merkmalen des Anspruchs 12 und durch ein Verfahren mit den Merkmalen des Anspruchs 13. Vorteilhafte Ausgestaltungen der Erfindung ergeben sich mit den Merkmalen der Unteransprüche.

Dadurch, dass die Einlage einen Rand der Durchtrittsöffnung an einer Seite überragt und dort in einem Überlappungsbereich von Einlage und Träger ein Scharnier für eine durch das Oberflächendekor und die Zwischenlage mit der Einlage gebildete Airbagklappe bildet, wobei bei einem Aufklappen der Airbagklappe ein von einer Stärke eines Öffnungsstoßes des Airbags abhängiger Energiebetrag dadurch absorbierbar ist, dass sich die Zwischenlage mit der Einlage beim Aufklappen im Überlappungsbereich vom Rand weg vom Träger ablöst, wird für sehr verschieden starke Öffnungsstöße sowohl ein sicheres Öffnen der Abdeckung sichergestellt als auch erreicht, dass keine zu großen Energieeinträge in das Innenverkleidungsteil zu unkontrollierten Schäden und damit verbundenen gefährlichen Phänomenen wie Partikelflug führen. Es lässt sich also problemlos eine Auslegung realisieren, die einerseits hinreichend schwach ist, um auch bei einem z.B. temperaturbedingt oder aufgrund eines Ausbleibens einer zweiten Airbagstufe sehr schwachen Öffnungsstoß eine sichere und hinreichend weite Öffnung der Airbagklappe zu gewährleisten, bei der aber andererseits auch bei einem sehr starken Öffnungsstoß, beispielsweise bei einer Auslösung aller Stufen, keine unkontrollierten und gefährlichen Zerstörungen durch den sich öffnenden Airbag verursacht werden.

Realisiert wird dieser Vorteil mit einem nach wie vor sehr einfachen Aufbau, der insbesondere auf eine Ausführung der Airbagklappe als starres Bauteil und auf ein kompliziertes Scharnier mit stark beanspruchten beweglichen Teilen verzichtet. Als Scharnier dient vielmehr die dafür hinreichend weiche Einlage, die bei einer Öffnung mit der sie enthaltenden Zwischenlage und dem Oberflächendekor aufgebogen wird. Vorher reißt das Oberflächendekor und die Zwischenlage an einer dem Scharnier gegenüberliegenden Seite der Durchtrittsöffnung auf, wobei die Einlage und/oder die Zwischenlage längs des Randes der Durchtrittsöffnung dort und seitlich der Airbagklappe geschwächt ausgeführt sein kann, was ein präzises Aufreißen begünstigt. Alternativ kann die Einlage so dimensioniert sein, dass sie genau dort endet, wo das Innenverkleidungsteil aufreißen soll, also mit Ausnahme der Seite, an der die Einlage das Scharnier bildet, am Rand der Durchtrittsöffnung.

Ein nach dem Aufreißen verbleibender oder hinzukommender Betrag einer durch den Öffnungsstoß in das Innenverkleidungsteil eingebrachten Energie wird dann durch das Ablösen der Zwischenlage mit der Einlage vom Träger im Überlappungsbereich vom Rand der Durchtrittsöffnung weg absorbiert. Dabei löst sich die dort als Scharnier fungierende Einlage mit der Zwischenlage abhängig vom Betrag dieser Energie mehr oder weniger weit ab, in der Regel bis zu einer ungefähr parallel zum Rand der Durchtrittsöffnung verlaufenden Linie, die um so weiter von diesem Rand entfernt verläuft, je größer die Wucht des Öffnungsstoßes und damit der Energieeintrag in das Innenverkleidungsteil war. Das durch die Einlage gebildete Scharnier wandert also bei einem vergleichsweise heftigen Öffnungsstoß vom Rand der Durchtrittsöffnung weg. Die Möglichkeit, dadurch sehr unterschiedliche Energiebeträge zu absorbieren, ist schließlich auch deshalb von Vorteil, weil das Innenverkleidungsteil eine temperaturabhängige Stabilität und Sprödigkeit haben kann. Ein schädlicher Partikelflug bei einer Airbagauslösung wird mit einem erfindungsgemäßen Innenverkleidungsteil auch dadurch effektiv vermieden, dass einerseits eine die Airbagklappe aufreißende Kraft durch die Einlage eher flächig auf das Oberflächendekor einwirkt und andererseits unter Umständen dennoch entstehende Risse durch Adhäsion an der Einlage, vorzugsweise einem Abstandsgewirke, hängen bleiben und somit eine Entstehung von Bruchstücken vermieden wird.

Bei einer bevorzugten Ausführung der Erfindung ist die vorzugsweise faserige oder poröse Einlage zumindest teilweise, besser noch vollständig von einem die Zwischenlage bildenden Schaum durchdrungen. Dadurch ergibt sich eine formschlüssige Verbindung des Schaums mit der Einlage, was ein Hängenbleiben von bei einer Airbagauslösung entstehenden Partikeln und Bruchstücken in der Einlage begünstigt. Ferner lässt sich dadurch sehr einfach eine Verbindung der Einlage mit dem Träger realisieren, wodurch ein Energieverzehr beim Ablösen der Einlage vom Träger sichergestellt wird. Unerheblich ist dabei übrigens, ob Reste der Zwischenlage am Träger haften bleiben.

Um eine gute Durchtränkung der Einlage mit dem Schaum der Zwischenlage sicherzustellen, bietet sich eine Fertigung der Einlage aus einem Abstandsgewirke, vorzugsweise einem Polyamid-Gewirke oder einem anderen polymeren Gewirke an, das zum einen hinreichend weich ist, andererseits aber dem Innenverkleidungsteil im Bereich der Durchtrittsöffnung die nötige Formstabilität geben kann. Dadurch wird auch ein guter Kraftübertrag von der Airbagklappe auf das Scharnier möglich.

Um ein vollständiges Abreißen der Airbagklappe in jedem Fall zu verhindern, kann die Einlage an einem dem Rand der Durchtrittsöffnung gegenüberliegenden Ende des Überlappungsbereichs eigens am Träger befestigt sein, so dass eine Verbindung zwischen der Einlage und dem Träger nicht bloß durch den Schaum der Zwischenlage gegeben ist. In einfacher Weise kann die Einlage dazu am Träger angenietet oder angeschraubt sein.

Bei vorteilhaften Ausgestaltungen der Erfindung kann die Einlage mit einer weiteren Lage oder auch mehreren weiteren Lagen hinterlegt sein. Eine solche zwischen der Einlage und dem Träger bzw. der Durchtrittsöffnung im Träger angeordnete Lage kann sowohl zur Abdichtung der Durchtrittsöffnung dienen, um dort ein Austreten von Schaum beim Hinterschäumen des Oberflächendekors zu verhindern, als auch, um der Airbagklappe eine höhere Zugbelastbarkeit zu verleihen. Einer hohen Zugbelastung ist die Airbagklappe insbesondere bis zum Aufreißen durch den sich öffnenden Airbag ausgesetzt. Um ein un kontrolliertes Zerreißen der Airbagklappe zu verhindern, eignet sich eine Hinterlegung der Einlage mit einer Gewebeschicht besonders gut. Zur Abdichtung der Durchtrittsöffnung dagegen bietet sich eine Folie oder ein hinreichend dichtes Vlies an. Eine solche zusätzliche Lage (Abdichtungs- und/oder Verstärkungslage) kann an die Einlage angenäht oder angeklebt sein, was eine richtige Positionierung dieser Lage hinter der Einlage erleichtert.

Um den beschriebenen Effekt eines variablen Energieeintrags durch den sich öffnenden Airbag in das Innenverkleidungsteil in einem zweckmäßigen Umfang sicherzustellen, sollte der Überlappungsbereich quer zum Rand der Durchtrittsöffnung eine Ausdehnung von mindestens 4 cm, besser noch mindestens 7 cm haben. Eine Überlappung um mehr als 20 cm ist nicht erforderlich und kann im Interesse einer nicht unnötig erschwerten Hinterschäumung vermieden werden.

Eine Anordnung eines Airbags hinter einem Innenverkleidungsteil der beschriebenen Art ist insbesondere für Beifahrerairbags von Vorteil, die üblicherweise ein besonders großes Volumen haben und bei denen dadurch in der Regel mit besonders heftigen Öffnungsstößen zu rechnen ist. Bei einer erfindungsgemäßen Ausführung des entsprechenden Innenverkleidungsteils, das dann eine Instrumententafel sein wird, kommen die beschriebenen Vorteile daher besonders zur Geltung.

Eine preiswerte Herstellung eines erfindungsgemäßen Innenverkleidungsteils, das die beschriebenen Vorteile aufweist und angenehme haptische Eigenschaften hat, ergibt sich bei einer Verwendung von Polyurethanschaum für die Zwischenlage, wobei der Träger, der dem Innenverkleidungsteil insgesamt eine hinreichende Stabilität geben soll, aus Polypropylen oder einem polypropylenhaltigen Kunststoff gefertigt und beispielsweise als Spritzgussteil ausgeführt sein kann.

Um eine hinreichende Stabilität auch im Bereich der Durchtrittsöffnung zu gewährleisten, der bei einer Airbagauslösung besonders beansprucht ist, kann der Träger dort durch einen Kunststoffrahmen und/oder einen Metallrahmen verstärkt sein. Ein solcher Rahmen kann die Durchtrittsöffnung umgeben und hinter dem Träger oder zwischen dem Träger und der Zwischenlage beispielsweise angeschweißt, angegossen, angeschraubt oder angenietet sein. Ein solcher Rahmen eignet zugleich zur Befestigung eines hinter dem Innenverkleidungsteil angeordneten Airbagmoduls.

Bei einem besonders einfachen Verfahren zur Herstellung eines Innenverkleidungsteils der hier vorgeschlagenen Art kann die Einlage mit einer ihr hinterlegten Abdichtungslage und eventuell mit einer zusätzlichen Gewebelage so in einem Hohlraum zwischen dem in ein Hinterschäumwerkzeug eingelegten Oberflächendekor und dem Träger eingebracht werden, dass die Durchtrittsöffnung abgedeckt wird, wonach der genannte Hohlraum durch ein Hinterschäumen des Oberflächendekors gefüllt werden kann. Die Abdichtungslage kann, wie auch eine unter Umständen zusätzlich vorgesehene Verstärkungslage (z.B. Gewebelage), an der Einlage befestigt sein und mit dieser zusammen auf dem Träger angeordnet werden, als auch vor dem Einbringen der Einlage so am Träger befestigt werden, beispielsweise durch Ankleben, dass sie schließlich zwischen dem Träger und der Einlage zu liegen kommt.

Um eine Verbindung des Schaums der Zwischenlage mit dem Träger und dadurch eine Verbindung der Einlage mit dem Träger zu erreichen, kann die Abdichtungslage oder eine weitere eventuell vorhandene Lage, die der Einlage hinterlegt ist, im Überlappungsbereich mit Aussparungen versehen sein. Eine unter Umständen erforderliche Schwächung der Zwischenlage und/oder der Einlage kann nach dem Hinterschäumen vorgenommen werden, beispielsweise durch ein Einschneiden von hinten. Dieser zusätzliche Arbeitsschritt lässt sich aber vermeiden, wenn eine geeignete Dimensionierung der Einlage ein Aufreißen der Airbagklappe am Rand der Durchtrittsöffnung auch ohne Schwächung sicherstellt oder wenn die Einlage schon mit einer entsprechenden Schwächung in dem Hohlraum zwischen Oberflächendekor und Träger eingebracht wird.

Ein Ausführungsbeispiel der Erfindung wird im Folgenden anhand der Figuren 1 bis 3 erläutert. Es zeigt:
- Figur 1: einen Querschnitt durch ein erfindungsge- mäßes Innenverkleidungsteil, das einen Teil einer Instrumententafel bildet und hinter dem ein Airbagmodul angeordnet ist,
- Figur 2: eine Aufsicht auf eine Einlage, die in das Innenverkleidungsteil aus der Figur 1 ein- gelegt ist und
- Figur 3: einen Querschnitt durch diese Einlage.

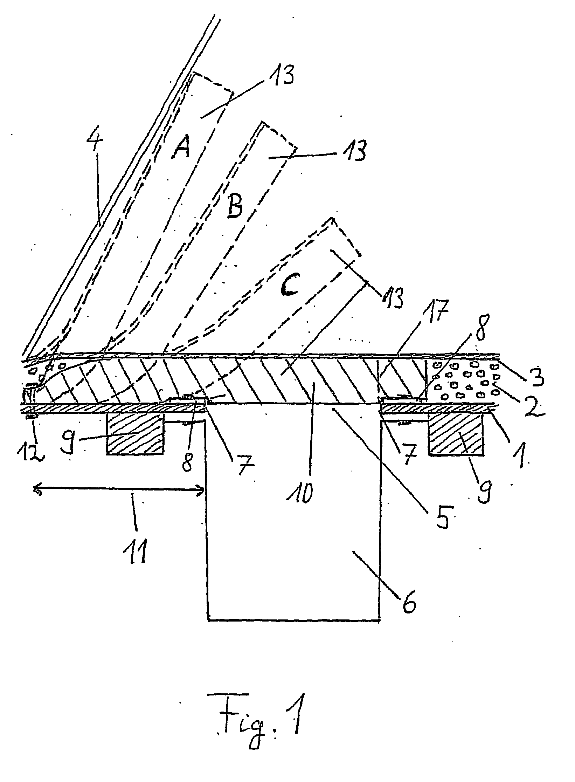

Der in der Figur 1 abgebildete Teil einer Instrumententafel weist einen flächigen Träger 1 aus Polypropylen, ein durch eine Gießhaut gebildetes Oberflächendekor 3 und eine Zwischenlage 2 auf, wobei die Zwischenlage 2 im Wesentlichen aus einem Polyurethanschaum besteht. In der Figur ist auch eine Windschutzscheibe 4 eines Kraftfahrzeugs, in das die Instrumententafel eingebaut ist, zu erkennen. In dem Träger 1 ist eine Durchtrittsöffnung 5 für einen Beifahrerairbag ausgespart. Hinter der Durchtrittsöffnung 5 ist ein Airbagmodul 6 angeordnet, das an einem Rand 7 der Durchtrittsöffnung 5 an den Träger angeschraubt ist, wozu dort Einlegebleche 8 auf den Träger 1 aufgelegt sind. Der Träger 1 ist außerdem durch einen die Durchtrittsöffnung 5 umgebenden Kunststoffrahmen 9 verstärkt, der von unten an den Träger 1 angeschmolzen ist. In die Zwischenlage 2 ist eine Einlage 10 aus einem Polyamidgewirke eingelegt, die ein Bestandteil der Zwischenlage 2 ist und von dem die Zwischenlage 2 bildenden Polyurethanschaum durchdrungen ist. Diese Einlage 1 0 deckt die Durchtrittsöffnung 5 ab und gibt der Instrumententafel dadurch dort eine gewisse Formstabilität.

In der Abbildung nach links hin, also in Fahrtrichtung des Fahrzeugs, überragt die Einlage 10 den Rand 7 der Durchtrittsöffnung 5 und hat dort quer zum Rand 7 einen Überlapp 11 von etwa 7 cm mit dem Träger 1. In einem dem Überlapp 11 entsprechenden Abstand vom Rand 7 ist die Einlage 10 bzw. ein in Fahrtrichtung des Fahrzeugs liegendes Ende der Einlage 10 durch eine Nietverbindung 12 am Träger 1 befestigt. Nicht in der Figur 1 zu erkennen ist eine Gewebelage und eine Folie, die der Einlage 10 hinterlegt sind, um einer durch das Oberflächendekor 3 und die Zwischenlage 2 mit der Einlage 10 gebildeten Airbagklappe 13 eine erhöhte Zugbelastbarkeit zu geben und eine Abdichtung der Durchtrittsöffnung 5 zu gewährleisten. Um ein Aufreißen des Oberflächendekors 3 und der Zwischenlage 2 durch den sich öffnenden Beifahrerairbag zu erleichtern und dadurch ein durch den sich öffnenden Airbag verursachtes Öffnen der Airbagklappe 13 zu ermöglichen, ist die das Oberflächendekor 3 bildende Gießhaut, der Schaum der Zwischenlage 2 und die Einlage 10 längs des Randes 7 der Durchtrittsöffnung 5 geschwächt mit Ausnahme jener in der Figur 1 links liegenden Seite, an der die Einlage 10 den Überlapp 11 mit dem Träger 1 hat. Eine Schwächung 17 ist dabei durch eine Perforierung der Einlage 10 und des Schaums der Zwischenlage 2 sowie durch eine reduzierte Stärke des Oberflächendekors 3 realisiert.

Dort, wo die Einlage 10 den Rand 7 der Durchtrittsöffnung 5 überragt und den Überlapp 11 mit dem Träger 1 hat, dient die Einlage 10 als Scharnier für die Airbagklappe 13, wobei sich die Zwischenlage 2 mit der Einlage 10 dort vom Rand 7 weg vom Träger 1 löst, wenn sich die Airbagklappe 13 unter Einwirkung des Airbags öffnet. Dabei löst sich die Zwischenlage 2 mit der Einlage 10 bis zu einer um so weiter vom Rand 7 entfernt liegenden Stelle, je stärker ein Öffnungsstoß des Airbags ist. Beispielhaft ist die geöffnete Airbagklappe 13 hier für drei mögliche Szenarien A, B und C abgebildet, wobei das Szenario A einem sehr heftigen, das Szenario B einem mittelstarken und das Szenario C einem verhältnismäßig schwachen Öffnungsstoß entspricht. Abhängig von der Stärke des Öffnungsstoßes, die z.B. temperaturabhängig sein kann oder bei einem mehrstufigen Airbag davon abhängig ist, wie viele Stufen gezündet werden, kann dadurch ein Energiebetrag entsprechend variierender Größe von der sich öffnenden Airbagklappe 13 absorbiert werden, wodurch unkontrollierte Schäden bei einer heftigen Airbagauslösung vermieden werden können, gleichzeitig aber eine auch für einen verhältnismäßig leichten Öffnungsstoß hinreichend schwache Auslegung möglich ist.

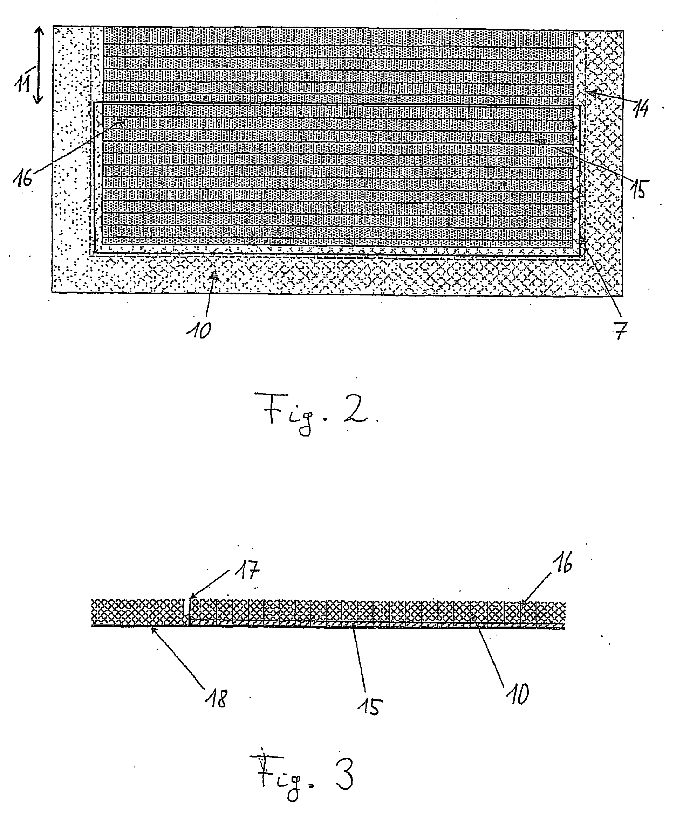

In Fig. 2 ist eine Aufsicht auf die Einlage 10 des gleichen Ausführungsbeispiels abgebildet. Die Einlage 10 besteht hier aus dem Produkt Enkamat 7210 ® des Herstellers Colbond Geosynthetics GmbH. Der Rand 7 der Durchtrittsöffnung des hier nicht abgebildeten Trägers 1 ist als durchgezogene Linie eingezeichnet, eine weitere, gestrichelte Linie 14 deutet an, wo die Einlage 10 perforiert und dadurch geschwächt ist. Ferner ist eine Gewebelage 15 zu erkennen, die rückseitig auf die Einlage 10 aufgenäht ist mit Nähten 16. Eingezeichnet ist auch wieder der Überlapp 11.

Figur 3 schließlich zeigt einen Querschnitt durch die gleiche Einlage 10. Zu erkennen ist auch die Gewebelage 15, die durch die Naht 16 hinter der Einlage 10 befestigt ist und die Schwächung 17, welche längs der Linie 14 aus Figur 2 verläuft. Schließlich ist eine der Einlage 10 und der Gewebelage 15 hinterlegte Abdichtungslage 18 zu erkennen, die hier als Folie ausgeführt ist, an deren Stelle aber auch ein Abdichtungsvlies in Frage kommt. Diese Abdichtungslage 18 ist im Bereich des hier nicht eingezeichneten Überlapps 11 mit Aussparungen versehen, um eine Verbindung der Einlage 10 mit dem ebenfalls nicht abgebildeten Träger 1 durch den Polyurethanschaum der Zwischenlage 2 zu ermöglichen.

Es sind auch von dem anhand der Figuren 1 bis 3 erläuterten Ausführungsbeispiel abweichende Ausführungen der Erfindung denkbar, insbesondere solche, bei denen von der hier vorgestellten optionalen Merkmalen nur ausgewählte in beliebiger Kombination realisiert sind. Die Erfindung schlägt also in größter Allgemeinheit ein Innenverkleidungsteil zur Abdeckung eines Airbags vor, das einen flächigen Träger, ein Oberflächendekor und eine geschäumte Zwischenlage aufweist, wobei in dem Träger eine Durchtrittsöffnung für den Airbag ausgespart ist und eine die Durchtrittsöffnung abdeckende Einlage so in die Zwischenlage eingelegt ist, dass die Einlage einen Rand der Durchtrittsöffnung an einer Seite überragt und dort in einem Überlappungsbereich der Einlage und des Träger als Scharnier für eine durch das Oberflächendekor und die Zwischenlage mit der Einlage gebildete Airbagklappe dient, wobei ferner bei einem Aufklappen der Airbagklappe ein von einer Stärke eines Öffnungsstoßes des Airbags abhängiger Energiebetrag absorbier ist durch ein im Überlappungsbereich vom Rand weg erfolgendes, zumindest teilweises Ablösen der Zwischenlage mit der Einlage vom Träger. Dabei wird die Einlage als von der Zwischenlage umfasst verstanden.

Damit in beschriebener Weise ein von der Stärke des Öffnungsstoßes abhängiger Energiebetrag absorbiert werden kann, sollte eine direkte oder indirekte, möglichst großflächige Verbindung der Einlage mit dem Träger vorgesehen sein. So wäre es beispielsweise möglich, die Einlage im Überlappungsbereich auf den Träger aufzukleben, eventuell aber auch nur an mehreren Stellen punktuell zu befestigen. Besonders einfach lässt sich eine erwünschte Verbindung der Einlage mit dem Träger aber realisieren, indem die vorzugsweise faserige oder poröse Einlage zumindest teilweise, besser noch vollständig von einem von der Zwischenlage umfassten, diese vorzugsweise zumindest bereichsweise bildenden Schaum durchdrungen ausgeführt wird.

## Patentansprüche

1. Innenverkleidungsteil zur Abdeckung eines Airbags, das einen flächigen Träger (1), ein Oberflächendekor (3) und eine geschäumte Zwischenlage (2) aufweist, wobei in dem Träger (1) eine Durchtrittsöffnung (5) für den Airbag ausgespart ist und eine die Durchtrittsöffnung (5) abdeckende Einlage (10) einen Rand (7) der Durchtrittsöffnung (5) an einer Seite überragt **dadurch gekennzeichnet, dass** die Einlage (10) in die Zwischenlage (2) eingelegt und zumindest teilweise von einem die Zwischenlage (2) bildenden Schaum durchdrungen ist, so dass der Schaum eine Verbindung der Einlage (10) mit dem Träger (1) bewirkt, und die Einlage (10) in einem Überlappungsbereich der Einlage (10) und des Trägers (1) als Scharnier für eine durch das Oberflächendekor (3) und die Zwischenlage (2) mit der Einlage (10) gebildete Airbagklappe (13) dient, wobei bei einem Aufklappen der Airbagklappe (13) ein von einer Stärke eines Öffnungsstoßes des Airbags abhängiger Energiebetrag absorbierbar ist durch ein Ablösen der Zwischenlage (2) mit der Einlage (10) vom Träger (1) vom Rand (7) weg im Überlappungsbereich.

2. Innenverkleidungsteil nach Anspruch 1, **dadurch gekennzeichnet, dass** die Einlage (10) vollständig von dem die Zwischenlage (2) bildenden Schaum durchdrungen ist.

3. Innenverkleidungsteil nach einem der Ansprüche 1 oder 2, **dadurch gekennzeichnet, dass** die Einlage (10) aus einem Abstandsgewirke, vorzugsweise aus einem Faden-Gewirke gefertigt ist.

4. Innenverkleidungsteil nach einem der Ansprüche 1 bis 3, **dadurch gekennzeichnet, dass** die Einlage (10) an einem dem Rand (7) der Durchtrittsöffnung (5) gegenüberliegenden Ende des Überlappungsbereiches am Träger (1) befestigt, vorzugsweise angenietet oder angeschraubt ist.

5. Innenverkleidungsteil nach einem der Ansprüche 1 bis 4, **dadurch gekennzeichnet, dass** die Einlage (10) und/oder die Zwischenlage (2) längs des Randes (7) der Durchtrittsöffnung (5) geschwächt ist an mindestens einer Seite, an der die Einlage (10) keine Scharnierfunktion hat.

6. Innenverkleidungsteil nach einem der Ansprüche 1 bis 5, **dadurch gekennzeichnet, dass** die Einlage (10) mit einer Folie, einem Vlies und/oder einem Gewebe hinterlegt ist.

7. Innenverkleidungsteil nach Anspruch 6, **dadurch gekennzeichnet, dass** die Folie, das Vlies und/oder das Gewebe an die Einlage (10) angenäht oder angeklebt ist.

8. Innenverkleidungsteil nach einem der Ansprüche 1 bis 7, **dadurch gekennzeichnet, dass** der Überlappungsbereich quer zum Rand (7) der Durchtrittsöffnung (5) hat eine Ausdehnung von mindestens 4 cm, vorzugsweise mindestens 7 cm hat.

9. Innenverkleidungsteil nach einem der Ansprüche 1 bis 8, **dadurch gekennzeichnet, dass** es eine Instrumententafel oder ein Teil einer Instrumententafel ist.

10. Innenverkleidungsteil nach einem der Ansprüche 1 bis 9, **dadurch gekennzeichnet, dass** die Zwischenlage (2) durch einen Polyurethanschaum gebildet ist und/oder der Träger (1) aus einem Polypropylen gefertigt ist.

11. Innenverkleidungsteil nach einem der Ansprüche 1 bis 10, **dadurch gekennzeichnet, dass** der Träger (1) am Rand der Durchtrittsöffnung (5) verstärkt ist durch einen Kunststoff- und/oder Metallrahmen (9).

12. Airbaganordnung, bei der ein Airbagmodul (6) hinter einem Innenverkleidungsteil nach einem der Ansprüche 1 bis 11 angeordnet ist.

13. Verfahren zur Herstellung eines Innenverkleidungsteils nach einem der Ansprüche 1 bis 11, wobei die Einlage (10) so mit einer ihr hinterlegten Abdichtungslage (18) in einen Hohlraum, zwischen dem in ein Hinterschäumwerkzeug eingelegten Oberflächendekor (3) und dem Träger (1) eingebracht wird, dass die Durchtrittsöffnung (5) abgedeckt wird, und anschließend der Hohlraum durch Hinterschäumen des Oberflächendekors (3) gefüllt wird.

14. Verfahren nach Anspruch 13, **dadurch gekennzeichnet, dass** die Einlage (10) und/oder die Zwischenlage (2) nach dem Hinterschäumen mit einer längs des Randes (7) der Durchtrittsöffnung (5) verlaufenden Schwächung (17) versehen wird.

## Claims

1. An interior trim part for covering an airbag, which comprises a two-dimensional carrier (1), a surface decor (3) and a foamed intermediate layer (2), wherein a through-opening (5) for the airbag is recessed in the carrier (1), and an inlay (10) covering the through-opening (5) projects beyond an edge (7) of the through-opening (5) on one side,
**characterised in that**
the inlay (10) is applied into the intermediate layer (2) and at least partly is penetrated by a foam forming the intermediate layer (2), so that the foam effects a connection of the inlay (10) to the carrier (1), and the inlay in an overlapping region of the inlay (10) and of the carrier (1) serves as a hinge for an airbag flap (13) formed by the surface decor (3) and the intermediate layer (2) with the inlay (10), wherein with a folding open of the airbag flap (13), an energy amount which is dependent on the intensity of an opening impact of the airbag, may be absorbed by way of a release of the intermediate layer (2) with the inlay (10) from the carrier (1) away from the edge (7) in the overlapping region.

2. An interior trim part according to claim 1, **characterised in that** the inlay (10) is completely penetrated by the foam forming the intermediate layer (2).

3. An interior trim part according to one of the claims 1 or 2, **characterised in that** the inlay (10) is manufactured of a spacer fabric, preferably of a thread fabric.

4. An interior trim part according to one of the claims 1 to 3, **characterised in that** the inlay (10) is fastened on the carrier (1) at one end of the overlapping region which lies opposite the edge (7) of the through-opening (5), preferably riveted or screwed on.

5. An interior trim part according to one of the claims 1 to 4, **characterised in that** the inlay (10) and/or the intermediate layer (2) is weakened along the edge (7) of the through-opening (5) on at least one side on which the inlay (10) has no hinge function.

6. An interior trim part according to one of the claims 1 to 5, **characterised in that** a film, a non-woven and/or a fabric is applied behind the inlay (10).

7. An interior trim part according to claim 6, **characterised in that** the film, the non-woven and/or the fabric is sewn or bonded onto the inlay (10).

8. An interior trim part according to one of the claims 1 to 7, **characterised in that** the overlapping region transverse to the edge (7) of the through-opening (5) has an extension of at least 4 cm, preferably at least 7 cm.

9. An interior trim part according to one of the claims 1 to 8, **characterised in that** it is an instrument panel or a part of an instrument panel.

10. An interior trim part according to one of the claims 1 to 9, **characterised in that** the intermediate layer (2) is formed by a polyurethane foam and/or the carrier is manufactured of a polypropylene.

11. An interior trim part according to one of the claims 1 to 10, **characterised in that** the carrier (1) is reinforced on the edge of the through-opening (5) by a plastic- and/or metal frame (9).

12. An airbag arrangement with which an airbag module (6) is arranged behind an interior trim part according to one of the claims 1 to 11.

13. A method for manufacturing an interior trim part according to one of the claims 1 to 11, wherein the inlay (10) with a sealing layer (18) applied behind it, is introduced into a cavity between the surface decor (3) applied into a rear-foaming tool, and the carrier (3), such that the through-opening (5) is covered, and subsequently the cavity is filled by rear-foaming the surface decor (3).

14. A method according to claim 13, **characterised in that** the inlay (10) and/or the intermediate layer (2) after the rear foaming, is provided with a weakening (17) running along the edge (7) of the through opening (5).

## Revendications

1. Pièce d'habillage intérieur pour recouvrir un airbag, qui présente un support plat (1), une décoration de surface (3) et une couche intermédiaire expansée (2), dans laquelle une ouverture de passage (5) pour l'airbag est ménagée dans le support (1) et une garniture (10) recouvrant l'ouverture de passage (5) dépasse d'un bord (7) de l'ouverture de passage (5) sur un côté, **caractérisée en ce que** la garniture (10) est insérée dans la couche intermédiaire (2) et imprégnée au moins en partie d'une mousse formant la couche intermédiaire (2) de sorte que la mousse induise une liaison de la garniture (10) avec le support (1) et la garniture (10) sert, dans une zone de chevauchement de la garniture (10) et du support (1), de charnière pour un volet d'airbag (13) formé de la décoration de surface (3) et de la couche intermédiaire (2) avec la garniture (10), dans laquelle, lors d'une ouverture du volet d'airbag (13), une quantité d'énergie dépendant de la force d'un choc d'ouverture de l'airbag peut être absorbée par un dégagement de la couche intermédiaire (2) avec la garniture (10) du support (1) du bord (7) dans la zone de chevauchement.

2. Pièce d'habillage intérieur selon la revendication 1, **caractérisée en ce que** la garniture (10) est complètement imprégnée de la mousse formant la couche intermédiaire (2).

3. Pièce d'habillage intérieur selon l'une quelconque des revendications 1 ou 2, **caractérisée en ce que** la garniture (10) est formée d'un maillage d'espacement, de préférence d'un maillage de fils.

4. Pièce d'habillage intérieur selon l'une quelconque des revendications 1 à 3, **caractérisée en ce que,** à une extrémité de la zone de chevauchement opposée au bord (7) de l'ouverture de passage (5), la garniture (10) est fixée au support (1), de préférence rivetée ou vissée.

5. Pièce d'habillage intérieur selon l'une quelconque des revendications 1 à 4, **caractérisée en ce que** la garniture (10) et/ou la couche intermédiaire (2) est et/ou sont affaiblie(s) le long du bord (7) de l'ouverture de passage (5) sur au moins un côté, sur lequel la garniture (10) n'a pas de fonction de charnière.

6. Pièce d'habillage intérieur selon l'une quelconque des revendications 1 à 5, **caractérisée en ce que** la garniture (10) est doublée d'une feuille, d'un non-tissé et/ou d'un tissu.

7. Pièce d'habillage intérieur selon la revendication 6, **caractérisée en ce que** la feuille, le non-tissé et/ou le tissu est et/ou sont cousu(s) ou collé(s) à la garniture (10).

8. Pièce d'habillage intérieur selon l'une quelconque des revendications 1 à 7, **caractérisée en ce que** la zone de chevauchement présente, transversalement au bord (7) de l'ouverture de passage (5), une extension d'au moins 4 cm, de préférence d'au moins 7 cm.

9. Pièce d'habillage intérieur selon l'une quelconque des revendications 1 à 8, **caractérisée en ce qu'**il s'agit d'un tableau de bord ou une partie d'un tableau de bord.

10. Pièce d'habillage intérieur selon l'une quelconque des revendications 1 à 9, **caractérisée en ce que** la couche intermédiaire (2) est formée d'une mousse de polyuréthanne et/ou le support (1) est formé d'un polypropylène.

11. Pièce d'habillage intérieur selon l'une quelconque des revendications 1 à 10, **caractérisée en ce que** le support (1) est renforcé au bord de l'ouverture de passage (5) par un cadre en matériau synthétique et/ou en métal (9).

12. Aménagement d'airbag, dans lequel un module d'airbag (6) est agencé derrière une pièce d'habillage intérieur selon l'une quelconque des revendications 1 à 11.

13. Procédé de fabrication d'une pièce d'habillage intérieur selon l'une quelconque des revendications 1 à 11, dans lequel la garniture (10) est incorporée avec une couche d'étanchéité (18) la doublant à un espace creux entre la décoration de surface (3) insérée dans un outil de moussage arrière et le support (1) de manière à recouvrir l'ouverture de passage (5) et l'espace creux est ensuite rempli par moussage arrière de la décoration de surface (3).

14. Procédé selon la revendication 13, **caractérisé en ce que** la garniture (10) et/ou la couche intermédiaire (2) est/sont pourvue(s) après le moussage arrière d'un affaiblissement (17) s'étendant le long du bord (7) de l'ouverture de passage (5).
